# EUROPÄISCHE PATENTSCHRIFT

(11) **EP 2 443 686 B1**
(45) Veröffentlichungstag und Bekanntmachung des Hinweises auf die Patenterteilung: **13.08.2014**
(21) Anmeldenummer: 10722307.5
(22) Anmeldetag: 20.05.2010
(51) Int. Cl.: H01M 2/20, H01M 10/60

(54) **BATTERIEANORDNUNG SOWIE VERFAHREN ZU DEREN HERSTELLUNG**
BATTERY ASSEMBLY AND METHOD FOR ITS ASSEMBLING
BLOC DE PILE ET MÉTHODE DE SA FABRICATION

(30) Priorität: 19.06.2009 DE 102009025579
(43) Veröffentlichungstag der Anmeldung: 25.04.2012
(73) Patentinhaber: Li-Tec Battery GmbH, 01917 Kamenz (DE)
(72) Erfinder: GUTSCH, Andreas, 59348 Luedinghausen (DE); SCHAEFER, Tim, 99768 Harztor (DE); HOHENTHANNER, Claus-Rupert, 63457 Hanau (DE); FUCHS, Andreas, 04229 Leipzig (DE)
(74) Vertreter: Wallinger, Michael
(86) Internationale Anmeldenummer: PCT/EP2010/003102
(87) Internationale Veröffentlichungsnummer: WO 2010/145742

(56) Entgegenhaltungen:
- EP-A1- 1 583 167
- EP-A1- 1 592 077
- EP-A1- 2 026 387
- JP-A- 2004 071 173
- US-A1- 2004 033 416
- US-A1- 2005 014 036

## Beschreibung

Die Erfindung betrifft eine Batterieanordnung sowie ein Verfahren zum Herstellen einer Batterieanordnung.

Aus der DE 10 2007 031 674 A1 ist eine elektrochemische Energiespeichereinheit bekannt, die eine Mehrzahl von Flachzellen umfasst. Die Flachzellen umfassen mindestens zwei Stromableiter und eine Ummantelung. Stromableiter von benachbarten Flachzellen sind über ein Verbindungselement miteinander elektrisch verbunden. Das Verbindungselement steht in thermischen Kontakt mit einer Wärmesenke. Mittels einer Niete ist die Wärmesenke formschlüssig oder kraftschlüssig mit einem Verbindungselement verbunden. Die Niete besteht aus Kunststoff.

Aus der WO 2008/016568 A2 ist eine Elektrochemische Zelle bekannt, die eine positive Elektrode, eine negative Elektrode, einen Separator und einen Elektrolyten umfasst. Diese Elemente sind in einer Umhüllung angeordnet. Mittels eines längliches Gegenstands, der in Form eines Nagels ausgebildet ist, wird ein elektrischer Kontakt zwischen einer Kontaktierungsoberfläche und einer der Elektroden hergestellt.

Die EP 1 592 077 offenbart einen elektrochemischen Energiespeicher.

Es ist Aufgabe der vorliegenden Erfindung eine verbesserte Batterieanordnung bereitzustellen.

Die der Erfindung zugrunde liegende Aufgabe wird gelöst durch eine Batterieanordnung, umfassend zumindest eine, insbesondere aber mehrere Elektrochemische Zellen, wobei zumindest eine Elektrochemische Zelle zumindest einen Stromableiter aufweist, der sich durch eine Umhüllung der Elektrochemischen Zelle erstreckt, dadurch gekennzeichnet, dass dieser zumindest eine Stromableiter mit einem Verbindungsstift in elektrisch leitender Verbindung ist.

Der Verbindungsstift ist vorzugsweise ein von der Elektrochemischen Zelle und damit vom Stromableiter separates Bauteil, der die Umhüllung der Elektrochemischen Zelle vorzugsweise nicht durchdringt. Unter einem Verbindungsstift ist insbesondere ein länglicher Gegenstand zu verstehen, der insbesondere einen zylindrischen Korpus aufweist, wobei die der zylindrischen Form zugrunde liegende Grundfläche vorzugsweise eine Kreisfläche oder ein Vieleck sein kann. Dabei weist der Korpus insbesondere einen über seine axiale Länge gleichbleibenden Querschnitt auf. Alternativ kann sich der Querschnitt auch etwas verjüngen, insbesondere in axialer Richtung hin zu einer Spitze. Die axiale Länge des Korpus ist vorzugsweise um ein Vielfaches größer als die Querschnittsdicke des Korpus. An seinem einen Ende weist der Verbindungsstift vorzugsweise eine Spitze auf, so dass er sich insbesondere leichter durch andere Gegenstände hindurchführen lässt. An einem anderen Ende des Korpus weist der Verbindungsstift insbesondere eine abgeplattete Auflagefläche auf, die als Angriffsfläche für ein Werkzeug dient, mit dem der Verbindungsstift in Richtung seiner axialen Ausrichtung insbesondere schlagartig beschleunigt werden kann. Alternativ zu der abgeplatteten Stelle kann der Verbindungsstift auch entlang seines Korpus mit Kraft beaufschlagt werden oder eine andere Angriffsfläche zur Aufbringung eines Kraftstoßes aufweisen. Der Korpus kann eine homogene Umfangsfläche aufweisen, die aber auch durch einzelne Kerben oder sonstige Unebenheiten unterbrochen sein kann. Vorzugsweise ist der Verbindungsstift an seiner Oberfläche gehärtet. Er kann einen weichen Kern haben. Der Verbindungsstift kann durch einen Nagel dargestellt sein oder im Wesentlichen die äußere Gestalt eines Nagels aufweisen. Zumindest die Oberfläche des Verbindungsstifts, insbesondere der vollständige Verbindungsstift, ist aus einem leitendem Material hergestellt, insbesondere aus einem Metall, welches vorzugsweise gehärtet ist.

Die Kontaktierung des Stromableiters mit dem Verbindungsstift ist vereinfacht, da der Verbindungsstift vorzugsweise auf einfache Weise durch gezieltes Kraftaufbringen mit dem Stromableiter in elektrisch leitende Verbindung gebracht werden kann.

Unter Umhüllung ist im Rahmen der Erfindung eine zumindest teilweise Begrenzung zu verstehen, welche zumindest einen Elektrodenstapel nach außen hin abgrenzt. Die Umhüllung ist vorzugsweise gas- und flüssigkeitsdicht, so dass ein Materialaustausch mit der Umgebung nicht stattfinden kann. Die Elektrodenstapel sind innerhalb der Umhüllung angeordnet. Wenigstens ein Stromableiter, insbesondere zwei Stromableiter erstrecken sich aus der Umhüllung hinaus und dienen zum Anschließen der Elektrodenstapel. Die nach außen sich erstreckenden Stromableiter stellen dabei vorzugsweise den Pluspolanschluss und den Minuspolanschluss der Elektrochemischen Zelle dar. Jedoch können sich auch mehrere Stromableiter aus der Umhüllung erstrecken, insbesondere vier Stromableiter. Wenn die Elektrochemische Zelle dabei zwei Elektrodenstapel aufweist, die miteinander in Reihe geschaltet sind, so sind zwei Elektroden unterschiedlicher Elektrodenstapel miteinander verbunden.

Im Sinne der Erfindung ist unter einem Elektrodenstapel eine Einrichtung zu verstehen, welche als Baugruppe einer galvanischen Zelle auch der Speicherung chemischer Energie und zur Abgabe elektrischer Energie dient. Vor der Abgabe elektrischer Energie wird gespeicherte chemische Energie in elektrische Energie gewandelt. Während des Ladens wird die dem Elektrodenstapel bzw. der galvanischen Zelle zugeführte elektrische Energie in chemische Energie gewandelt und abgespeichert. Dazu weist der Elektrodenstapel mehrere Schichten auf, wenigstens eine Anodenschicht, eine Kathodenschicht und eine Separatorschicht. Die Schichten sind übereinander gelegt bzw. gestapelt, wobei die Separatorschicht wenigstens teilweise zwischen einer Anodenschicht und einer Kathodenschicht angeordnet ist. Vorzugsweise wiederholt sich diese Abfolge der Schichten innerhalb des Elektrodenstapels mehrfach. Bevorzugt sind einige Elektroden miteinander insbesondere elektrisch verbunden, insbesondere parallel geschaltet. Vorzugsweise sind die Schichten zu einem Elektrodenwickel aufgewickelt. Nachfolgend wird der Begriff "Elektrodenstapel" auch für Elektrodenwickel verwendet.

Ein Stromableiter ist dabei ein Element, welches aus einem stromleitenden Material hergestellt ist. Es dient zur Leitung von Strom zwischen zwei geometrisch voneinander getrennten Punkten. Im vorliegenden Fall ist ein Stromableiter mit einem Elektrodenstapel verbunden. Insbesondere ist der Stromableiter dabei mit allen gleichartigen Elektroden eines Elektrodenstapels verbunden, d.h. entweder mit den Kathoden oder mit den Anoden. Es ist selbstverständlich, dass ein Stromableiter nicht mit den Kathoden und Anoden eines Elektrodenstapels gleichzeitig verbunden ist, da dies zu einem Kurzschluss führen würde. Jedoch kann ein Stromableiter mit unterschiedlichen Elektroden von unterschiedlichen Elektrodenstapeln verbunden sein, so z.B. bei einer Reihenschaltung der beiden Elektrodenstapel. Wenigstens ein Stromableiter erstreckt sich aus der Umhüllung und kann dabei zum Anschließen der Elektrochemischen Zellen nach außen dienen. Der Stromableiter kann mit einer oder mehreren Elektroden einstückig ausgebildet sein.

Vorzugsweise sind Stromableiter unterschiedlicher, insbesondere benachbarter, Elektrochemischer Zellen mittels eines Verbindungsstifts miteinander in elektrisch leitender Verbindung. Der Vorteil der Kontaktierung eines einzelnen Stromableiters wird somit auf die Verbindung zweier Stromableiter insbesondere zu Zwecken der Reihen- oder Parallelverschaltung der zugehörigen Elektrochemischen Zellen, angewendet. Insbesondere mittels eines gezielten Kraftaufbringens oder eines Kraftschlages können so mit Hilfe eines einzelnen Verbindungsstifts zwei oder auch mehrere Elektrochemische Zellen miteinander elektrisch verbunden werden. Dies erfolgt vorzugsweise in einem einzigen Verfahrensschritt. Es versteht sich von selbst, dass diese Art der Verbindung nicht auf zwei Elektrochemische Zellen beschränkt ist, sondern auch auf mehrere Elektrochemische Zellen angewendet werden kann, die in einem Verfahrensschritt elektrisch leitend miteinander verbunden werden können.

Vorzugsweise durchdringt dabei der Verbindungsstift zumindest einen Stromableiter zumindest teilweise. Der Verbindungsstift kann dabei mehrere Stromableiter zugleich durchdringen. Die Stromableiter sind dabei entlang der axialen Ausrichtung des Korpus des Verbindungsstifts angeordnet. Dadurch, dass der Stromableiter durch den Verbindungsstift zumindest teilweise durchdrungen wird, kann eine sichere und zuverlässige Verbindung zwischen Verbindungsstift und Stromableiter hergestellt werden. Unter zumindest teilweise Durchdringen ist dabei zu verstehen, dass der Verbindungsstift nicht vollständig von dem Stromableiter umringt sein muss, aber kann. Vielmehr kann der Verbindungsstift sich auch lediglich an einer außen anliegenden Kerbe des Stromableiters anlegen und somit lediglich an einer Seite mit dem Stromableiter in elektrischer Verbindung sein. Bevorzugt hingegen ist jedoch, dass der Verbindungsstift vollständig den Stromableiter durchdringt, d.h. dass der Verbindungsstift zumindest an einer axialen Stelle ringförmig von dem Stromableiter umschlossen ist. Damit ist nicht gemeint, dass der Verbindungsstift an seiner gesamten äußeren Oberfläche von dem Stromableiter umschlossen sein muss.

Vorzugsweise durchdringt der Verbindungsstift den Stromableiter in einem Durchbruch zumindest teilweise, wobei um den Durchbruch insbesondere ein Krater gebildet ist. Der Durchbruch kann erst durch das Durchdringen des Verbindungsstifts durch den Stromableiter hindurch entstanden sein. Dann wäre der Stromableiter vor dem Herstellungsverfahren ohne Durchbruch. Alternativ kann bereits vor dem Herstellungsverfahren der Stromableiter einen Durchbruch aufweisen, der jedoch vorzugsweise kleiner im Durchmesser ist als der Durchmesser des Korpus des Verbindungsstifts. In beiden Fällen bewirkt das Hindurchdringen des Verbindungsstifts während des Herstellungsprozesses, dass der Durchbruch sich aufweitet. Durch das Aufweiten des Durchbruchs während des Durchdringens wird der Stromableiter im Bereich des Durchbruchs insbesondere zum Teil plastisch und insbesondere zum Teil elastisch verformt. Durch die elastische Verformung kann sich der Stromableiter im Bereich des Durchbruchs an den Verbindungsstift anschmiegen und damit eine stabile elektrische Verbindung zwischen diesen beiden Bauteilen gewährleisten. Insbesondere durch die plastische Verformung kann sich ein Krater entwickeln, der sich insbesondere dadurch auszeichnen kann, dass er im Bereich des Durchbruchs eine Stelle des Stromableiters bildet, die eine größere Ausdehnung im Querschnitt aufweist als der Stromableiter in anderen Bereichen, in denen der Stromableiter nicht plastisch verformt wurde. Durch die Erweiterung der Querschnittsdicke im Bereich des Kraters kann zusätzlich eine verbesserte elektrische Kontaktierung zwischen dem Stromableiter und dem Verbindungsstift hergestellt werden.

Vorzugsweise ist der Stromableiter zumindest teilweise in einer Ableiterkammer aufgenommen. Die Ableiterkammer, welche bevorzugt außerhalb der Umhüllung der Elektrochemischen Zelle angeordnet ist, bildet einen Aufnahmeraum für den Stromableiter, in dem dieser insbesondere von Umwelteinflüssen geschützt gehalten werden kann. In der Ableiterkammer können ferner weitere Einrichtungen zur Kontaktierung vorgesehen sein. Eine Ableiterkammer kann separat für jede Elektrochemische Zelle vorgesehen sein. Die Ableiterkammern mehrerer Elektrochemischen Zellen können aber auch zu einer gemeinsamen insbesondere großen Ableiterkammer zusammengefügt sein.

Vorzugsweise, insbesondere wenn mehrere Elektrochemische Zellen jeweils separate Ableiterkammern aufweisen, weist eine Ableiterkammer eine Öffnung auf. Durch die Öffnung kann der Verbindungsstift von außerhalb der Ableiterkammer in Richtung Stromableiter geführt werden, insbesondere während des Herstellungsprozesses. Dabei kann ein Werkzeug zur Montage des Verbindungsstifts, insbesondere ein Werkzeug zur Kraftstoßaufbringung auf den Verbindungsstift außerhalb der Ableiterkammer angeordnet sein, so dass die Kraftaufbringung außerhalb der Ableiterkammer geschieht. Vorzugsweise sind Öffnungen von Ableiterkammern benachbarter Elektrochemischer Zellen miteinander in Ausrichtung. Vorzugsweise sind diese Öffnungen der Ableiterkammern benachbarter Elektrochemischer Zellen dabei in Überdeckung zueinander. Insofern kann ein Verbindungsstift, welcher sich durch die Öffnung der einen Elektrochemischen Zelle hindurch erstreckt, zugleich auch durch die Öffnung der anderen Elektrochemischen Zelle hindurch erstrecken. Es können auch noch weitere Elektrochemische Zellen angeordnet werden, deren Öffnungen der Ableiterkammern jeweils in Ausrichtung und in Anlage einzeln zueinander sind. Dadurch kann ein Verbindungsstift zugleich mehrere Ableiterkammern durchdringen und mit den dort angeordneten Stromableitern in elektrischer Verbindung sein.

Der Verbindungsstift ist mit Metallschaum in Anlage und zumindest teilweise davon umschlossen. Der Metallschaum ist vorzugsweise in einer Ableiterkammer angeordnet und füllt diese insbesondere vollständig aus. Der Metallschaum kann für eine bessere Kontaktierung zwischen Stromableiter und Verbindungsstift dienlich sein. Unter Metallschaum ist dabei ein vorzugsweise poröser leitender Stoff zu verstehen, der sich insbesondere durch gute elektrische Leitfähigkeit bei zugleich geringem Gewicht auszeichnet. Der Metallschaum kann ausgehärtet sein.

Alternativ oder in Kombination dazu kann der Verbindungsstift zumindest mittelbar in Anlage mit einem Wärmeleitkörper aus insbesondere wärmeleitendem Material sein, insbesondere zumindest teilweise von diesem Wärmeleitkörper umschlossen sein. Zwischen dem Wärmeleitkörper und dem Verbindungsstift kann ein weiteres Element, insbesondere eine Schicht aus Metallschaum, angeordnet sein. Der Wärmeleitkörper ist vorzugsweise aus einem porenfreien Material hergestellt, was der besseren Wärmeleitfähigkeit dienlich sein kann.

Bevorzugt können an dem Wärmeleitkörper Kühlrippen ausgebildet sein, welche insbesondere für eine verbesserte Wärmeabfuhr vom Wärmeleitkörper weg nützlich sind. Vorzugsweise ist dabei im Bereich der Kühlrippen ein Belüftungskanal vorgesehen. Der Wärmeleitkörper kann vorzugsweise in der Ableiterkammer angeordnet sein. Er kann sich in mehrere Ableiterkammern hinein erstrecken. Es kann ein einzelner Wärmeleitkörper mehreren Elektrochemischen Zellen zugleich zugeordnet sein.

Die der Erfindung zugrunde liegende Aufgabe wird ferner gelöst durch ein Verfahren zur Herstellung einer Batterieanordnung, dadurch gekennzeichnet, dass Stromableiter der Batterieanordnung mit einem Verbindungsstift in elektrisch leitende Verbindung gebracht werden.

Vorzugsweise können Stromableiter unterschiedlicher, insbesondere benachbarter Elektrochemischer Zellen mittels eines Verbindungsstifts miteinander elektrisch leitend verbunden werden.

Der Verbindungsstift kann während des Verfahrens zum Herstellen einer Batterieanordnung zumindest teilweise durch den Stromableiter hindurchgeführt werden. Konkret kann der Verbindungsstift durch einen Durchbruch des Stromableiters hindurch geführt werden.

Vorzugsweise entsteht bei dem Hindurchführen des Verbindungsstifts durch den Stromableiter erst der Durchbruch. Alternativ kann der Durchbruch bereits vor dem Hindurchführen an den Stromableiter angebracht werden. Dies hat den Vorteil, dass der Durchbruch als Zentrierhilfe für den Verbindungsstift während und/oder vor dem Hindurchführen des Verbindungsstifts durch den Stromableiter verwendet werden kann. Ferner reduziert sich der Kraftaufwand, welcher für das Durchführen des Verbindungsstifts durch den Stromableiter benötigt wird.

Beim Hindurchführen des Verbindungsstifts durch den Stromableiter verformt sich der Durchbruch zumindest teilweise, insbesondere im Bereich des Durchbruchs plastisch und/oder elastisch.

Es kann sich beim Hindurchführen des Verbindungsstifts durch den Stromableiter ein Krater am Stromableiter, insbesondere an einem Durchbruch, ausbilden.

Vorzugsweise wird der Verbindungsstift zumindest teilweise durch den Stromableiter hindurch geschossen. Durch das Hindurchschießen wird vorzugsweise eine plastische und/oder elastische Verformung des Stromableiters hergestellt. Durch das Hindurchschießen können ferner mehrere Stromableiter in einem Verfahrensschritt von dem selben Verbindungsstift durchdrungen werden. Insofern kann die Kontaktierung mehrerer Stromableiter vereinfacht werden.

Während des Verfahrens zur Herstellung der Batterieanordnung wird der Verbindungsstift vorzugsweise durch eine Öffnung einer Ableiterkammer der Elektrochemischen Zelle hindurch geführt. Damit kann der Verbindungsstift in die Ableiterkammer gelangen und mit den dort angeordneten Stromableitern in Kontakt treten. Wenn mehrere Öffnungen von Ableiterkammern benachbarter Elektrochemischer Zellen miteinander in fluchtender Ausrichtung sind und/oder aneinander anliegen, kann der Verbindungsstift zugleich mit mehreren in fluchtender Ausrichtung zueinander angeordneten Stromableitern in Kontakt geraten.

Nachdem der Verbindungsstift mit zumindest einem Stromableiter in elektrisch leitende Verbindung gebracht wurde kann der Bereich um den Verbindungsstift mit Metallschaum zumindest teilweise ausgefüllt werden. Dabei kann der Metallschaum vorzugsweise mit dem Stromableiter und mit dem Verbindungsstift in Kontakt treten. Insbesondere wird eine Ableiterkammer zumindest teilweise, insbesondere vollständig mit Metallschaum gefüllt.

Die Erfindung wird anhand der nachfolgenden Figuren näher erläutert. Hierin zeigt:
- Fig. 1: eine erfindungsgemäße Batterieanordnung in einer ersten Ausführungsform
a) im Querschnitt,
b) von oben;
- Fig. 2: eine erfindungsgemäße Batterieanordnung in einer zweiten Ausführungsform
a) im Querschnitt,
b) von oben;

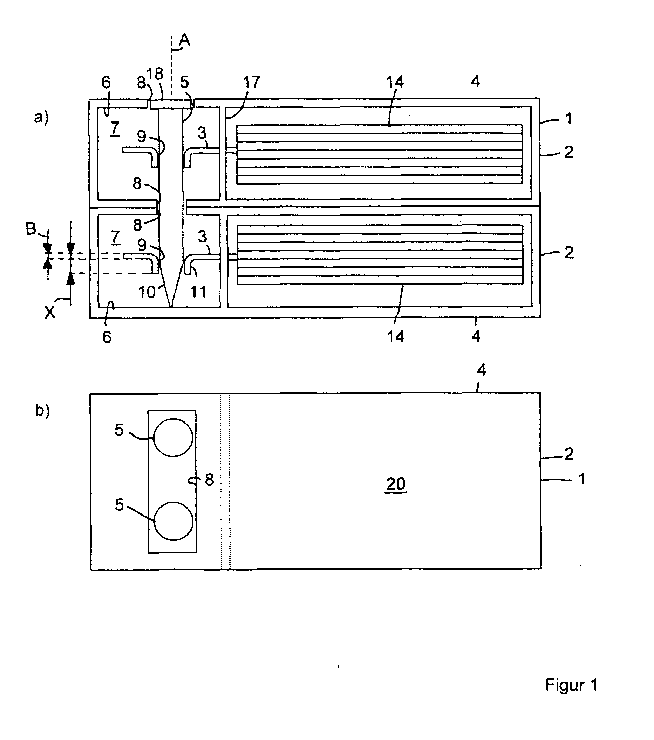

Figur 1 zeigt schematisch eine erfindungsgemäße Batterieanordnung 1 in einer ersten Ausführungsform, welche zwei Elektrochemische Zellen 2 umfasst. Die Batterieanordnung 1 kann darüber hinaus auch mehrere Elektrochemische Zellen 2 umfassen. Die Elektrochemischen Zellen 2 sind im Wesentlichen identisch gestaltet. Jede Elektrochemische Zelle 2 weist eine Umhüllung 4 auf, welche einen Elektrodenstapel 14 nach außen hin abgrenzt. An einer Stirnseite 17 der Elektrochemischen Zelle 2 durchdringt ein Stromableiter 3 die Umhüllung 4 der Elektrochemischen Zelle 2 und ragt somit von einem Inneren der Umhüllung 4 der Elektrochemischen Zelle 2 in einen Innenraum einer Ableiterkammer 6 hinein, welche nachfolgend näher erläutert wird. Der Stromableiter 3 ist aus einem leitenden Material hergestellt und mit zumindest Teilen der Elektroden des Elektrodenstapels 14 elektrisch leitend verbunden.

Die Ableiterkammer 6 ist an der Stirnseite 17 der Umhüllung 4 der Elektrochemischen Zelle 2 angeordnet. Die Ableiterkammer selbst ist dabei nicht Bestandteil der Umhüllung, da der Innenraum der Ableiterkammer 6 nicht zwangsläufig hermetisch gegenüber der Umwelt abgedichtet sein muss, aber kann.

In die Ableiterkammer 6 ragt ein Verbindungsstift 5 hinein, der durch eine Öffnung 8 an einer Begrenzung der Ableiterkammer 6 hindurch geführt wurde. Der Verbindungsstift 5 durchdringt dabei den Stromableiter 3 der Elektrochemischen Zelle in einem Durchbruch 9. Dabei wurde der Verbindungsstift 5 durch den Stromableiter 3 hindurchgeschossen, wobei sich der Stromableiter plastisch und elastisch verformt hat. Dabei ist der Durchbruch 9 erst während des Hindurchschießens entstanden. Das heißt ferner, dass der Stromableiter 3 vor dem Hindurchschießen keinen Durchbruch 9 aufgewiesen hat. Alternativ kann vor dem Hindurchschießen ein Durchbruch 9 an den Stromableiter angebracht worden sein, wodurch das Hindurchschießen erleichtert werden kann. Insbesondere kann der zum Hindurchschießen benötigte Kraftaufwand reduziert werden; ferner kann der Verbindungsstift 5 anhand des Durchbruchs 9 zentriert werden.

Durch das Hindurchschießen hat sich am Durchbruch 9 ferner ein Krater 11 durch die Verformung ausgebildet. Der Krater 11 zeichnet sich dadurch aus, dass er entlang einer Durchbruchrichtung, welcher der Längsachse A des Verbindungsstifts 5 entspricht, eine Ausdehnung X hat, die größer ist als eine Querschnittsdicke B des Stromableiters 3 an einer anderen, unverformten Stelle des Stromableiters 3. An dem Krater 11 liegt der Stromableiter 3 in weiten Teilen am Verbindungsstift 5 elektrisch leitend an. Zum Kraftaufbringen auf den Verbindungsstift 5 weist der Verbindungsstift 5 einen Teller 18 auf, welcher an der axial der Spitze 10 abgewandten Seite des Verbindungsstifts 5 angeordnet ist. Die Ausbildung des Verbindungsstifts 5 entspricht somit weitgehend der Ausbildung eines Nagels. Es ist zu erkennen, dass beide Elektrochemische Zellen 2 der Batterieanordnung 1 in Anlage zueinander sind. Dabei sind Öffnungen 8 der Ableiterkammern 6 beider Elektrochemischer Zellen 2 der Batterieanordnung 1 miteinander in Überdeckung. Konkret sind dabei die Öffnungen koaxial zur Längsachse A des Verbindungsstifts 5 ausgerichtet, so dass der Verbindungsstift 5 durch Öffnungen 8 beider Ableiterkammern 6 beider Elektrochemischer Zellen 2 der Batterieanordnung 1 hindurch geführt ist. Dabei durchdringt der Verbindungsstift 5 jeweils einen Stromableiter 3 der beiden Elektrochemischen Zellen 2 auf die vorher bereits erwähnte Art und Weise. Dadurch, dass der Verbindungsstift 5 zumindest in Teilen seiner Oberfläche, die mit den Stromableitern 3 in Kontakt stehen, elektrisch leitend verbunden ist, besteht eine elektrische Verbindung zwischen den gezeigten Stromableitern 3 der beiden Elektrochemischen Zellen 2. Die Elektrochemischen Zellen 2 der Batterieanordnung 1 können dadurch insbesondere in Reihe oder parallel zueinander geschaltet sein. An den Verbindungsstift 5 sind nicht dargestellte Verbraucher angeschlossen.

Der Innenraum der Ableiterkammern 6 ist vollständig mit Metallschaum 7 ausgefüllt. Dieser Metallschaum 7, der sowohl mit den Stromableitern 3 als auch mit dem Verbindungsstift 5 in elektrisch leitender Verbindung steht, erhöht die elektrische Verbindung zwischen den Stromableitern 3 und dem Verbindungsstift 5.

Es versteht sich von selbst, dass die Batterieanordnung 1, welche zwei Elektrochemische Zellen 2 umfasst, nur exemplarisch dargestellt ist. Es können ohne Weiteres auch mehrere Elektrochemische Zellen verwendet werden, die untereinander auf die selbe Art und Weise elektrisch miteinander verbunden werden können. Dabei ist es durchaus auch möglich, dass ein Verbindungsstift 5 mehr als zwei Stromableiter 3 zugleich durchdringt.

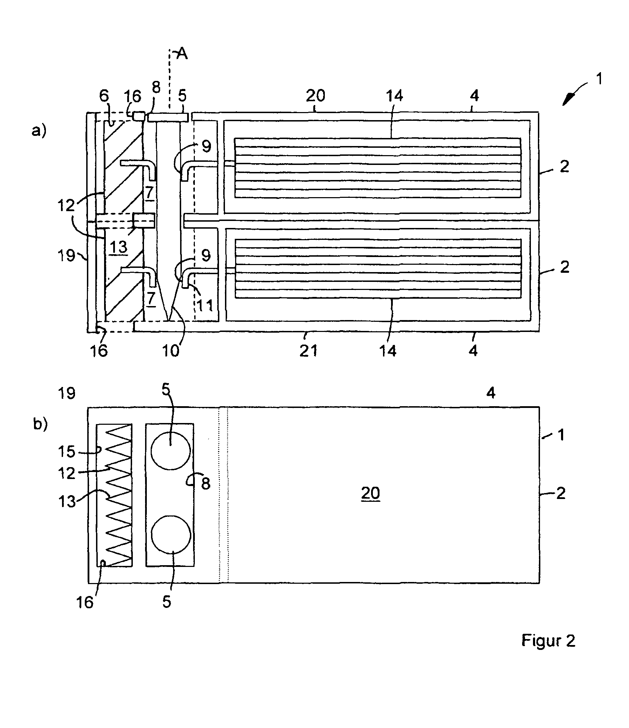

Figur 2 zeigt schematisch eine erfindungsgemäße Batterieanordnung in einer zweiten Ausführungsform, welche eine Weiterbildung der Batterieanordnung aus der Figur 1 ist und dieser weitgehend entspricht. Insofern wird auf die diesbezügliche Beschreibung verwiesen. Im Folgenden werden daher nur die Unterschiede der zweiten Ausführungsform gegenüber der ersten Ausführungsform beschrieben.

Die Ableiterkammern 6 der Elektrochemischen Zellen 2 sind nur teilweise mit Metallschaum 7 gefüllt. Dabei beschränkt sich der Bereich, der mit Metallschaum 7 befüllt ist, lediglich auf einen rohrförmigen Abschnitt, welcher koaxial zur Längsachse A des Verbindungsstifts 5 angeordnet ist. Insofern umschließt der Metallschaum 7 lediglich den Verbindungsstift 5 in dem Bereich, in dem sich der Verbindungsstift 5 in der Ableiterkammer 6 befindet. Alternativ oder zusätzlich hierzu kann der Metallschaum 7 auch die Stromableiter 3 innerhalb der Ableiterkammer 6 vollständig oder teilweise umschließen.

In einem dem Elektrodenstapel 14 abgewandten Bereich der Ableiterkammer 6 ist ferner ein Wärmeleitkörper 12 angeordnet, der mittelbar mit dem Verbindungsstift 5 in Anlage ist. Dabei ist der Wärmeleitkörper 12 unmittelbar mit dem Metallschaum 7 in Anlage, welcher wiederum mit dem Verbindungsstift 5 unmittelbar in Anlage ist. Am Wärmeleitkörper 12 sind Kühlrippen 13 angeordnet. Die Kühlrippen 13 ragen dabei von Richtung des Verbindungsstifts 5 weg in Richtung eines Luftkanals 15, welcher zwischen den Kühlrippen 13 und einer stirnseitigen Begrenzungsfläche 19 der Elektrochemischen Zelle 2 angeordnet ist. Der Luftkanal 15 verläuft dabei von einer Öffnung 16 an einer Oberseite 20 bis zu einer weiteren Öffnung 16 an einer Unterseite 21 in paralleler Ausrichtung zur Längsachse A. Die Kühlrippen verlaufen ebenfalls jeweils parallel zur Längsachse A. Es ergeben sich die bereits genannten Vorteile.

### Bezugszeichenliste

- 1: Batterieanordnung
- 2: Elektrochemische Zelle
- 3: Stromableiter
- 4: Umhüllung
- 5: Verbindungsstift
- 6: Ableiterkammer
- 7: Metallschaum
- 8: Öffnung
- 9: Durchbruch
- 10: Spitze
- 11: Krater
- 12: Wärmeleitkörper
- 13: Kühlrippen
- 14: Elektrodenstapel
- 15: Luftkanal
- 16: Öffnung
- 17: Stirnseite
- 18: Teller
- 19: stirnseitige Begrenzungsfläche
- 20: Oberseite
- 21: Unterseite

- A: Längsachse
- X: Ausdehnung
- B: Querschnittsdicke

## Patentansprüche

1. Batterieanordnung (1), umfassend zumindest eine, insbesondere aber mehrere Elektrochemische Zellen (2), wobei die zumindest eine Elektrochemische Zelle (2) zumindest einen Stromableiter (3) aufweist, der sich durch eine Umhüllung (4) der Elektrochemischen Zelle (2) erstreckt, wobei dieser zumindest eine Stromableiter (3) mit einem Verbindungsstift (5) in elektrisch leitender Verbindung ist, **dadurch gekennzeichnet, dass** der Verbindungsstift (5) durch Metallschaum (7) zumindest teilweise umschlossen ist.

2. Batterieanordnung nach dem vorhergehenden Anspruch,
**dadurch gekennzeichnet,**
**dass** der Metallschaum in einer Ableiterkammer angeordnet ist und diese vollständig ausfüllt.

3. Batterieanordnung nach wenigstens einem der vorhergehenden Ansprüche, **dadurch gekennzeichnet,**
**dass** der Verbindungsstift (5) zumindest mittelbar, insbesondere unmittelbar, mit einem Wärmeleitkörper (12) aus insbesondere wärmeleitendem Material in Anlage ist.

4. Batterieanordnung nach wenigstens einem der vorhergehenden Ansprüche, **dadurch gekennzeichnet,**
**dass** an dem Wärmeleitkörper (12) Kühlrippen (13) ausbildet sind.

5. Batterieanordnung (1) nach dem vorhergehenden Anspruch,
**dadurch gekennzeichnet,**
**dass** Stromableiter (3) unterschiedlicher, insbesondere benachbarter,
Elektrochemischer Zellen (2) mittels eines Verbindungsstifts (5) miteinander in elektrisch leitender Verbindung sind.

6. Batterieanordnung (1) nach wenigstens einem der vorhergehenden Ansprüche, **dadurch gekennzeichnet,**
**dass** der Verbindungsstift (5) zumindest einen, insbesondere mehrere Stromableiter (3) zumindest teilweise durchdringt.

7. Batterieanordnung (1) nach dem vorhergehenden Anspruch,
**dadurch gekennzeichnet,**
**dass** der Verbindungsstift (5) den Stromableiter (3) in einem Durchbruch (9) zumindest teilweise durchdringt, wobei um den Durchbruch (9) insbesondere ein Krater (11) gebildet ist.

8. Batterieanordnung (1) nach wenigstens einem der vorhergehenden Ansprüche, **dadurch gekennzeichnet,**
**dass** der Stromableiter (3) zumindest teilweise in einer Ableiterkammer (6) aufgenommen ist.

9. Batterieanordnung (1) nach dem vorhergehenden Anspruch,
**dadurch gekennzeichnet,**
**dass** die Ableiterkammer (6) außerhalb der Umhüllung (4) der Elektrochemischen Zelle (2) angeordnet ist.

10. Batterieanordnung (1) nach wenigstens einem der Ansprüche 8 oder 9,
**dadurch gekennzeichnet,**
**dass** eine Ableiterkammer (6) eine Öffnung (8) aufweist.

11. Batterieanordnung (1) nach wenigstens einem der Ansprüche 8 bis 10,
**dadurch gekennzeichnet,**
**dass** Öffnungen (8) von Ableiterkammern (6) benachbarter Elektrochemischer Zellen (2) miteinander in Ausrichtung sind.

12. Verfahren zum Herstellen einer Batterieanordnung,
bei dem Stromableiter (3) der Batterieanordnung (1) mit einem Verbindungsstift (5) in elektrisch leitende Verbindung gebracht werden,
**dadurch gekennzeichnet,**
**dass** der Verbindungsstift (5) durch Metallschaum (7) zumindest teilweise umschlossen ist.

13. Verfahren nach dem vorhergehenden Anspruch,
**dadurch gekennzeichnet,**
**dass** Stromableiter (3) unterschiedlicher, insbesondere benachbarter Elektrochemischer Zellen (2) mittels eines Verbindungsstifts (5) miteinander elektrisch leitend verbunden werden.

14. Verfahren nach wenigstens einem der Ansprüche 12 oder 13,
**dadurch gekennzeichnet,**
**dass** der Verbindungsstift (5) zumindest teilweise durch den Stromableiter (3) hindurch geführt wird, insbesondere durch einen Durchbruch (9) des Stromableiters (3) hindurchgeführt wird.

15. Verfahren nach dem vorhergehenden Anspruch,
**dadurch gekennzeichnet,**
**dass** sich beim Hindurchführen des Verbindungsstifts (5) durch den Stromableiter (3) der Stromableiter zumindest teilweise, insbesondere im Bereich des Durchbruchs (9), plastisch und/oder elastisch verformt.

16. Verfahren nach wenigstens einem der Ansprüche 12 bis 15,
**dadurch gekennzeichnet,**
**dass** sich beim Hindurchführen des Verbindungsstifts (5) durch den Stromableiter (3) ein Krater am Stromableiter (3), insbesondere am Durchbruch (9), ausbildet.

17. Verfahren nach wenigstens einem der Ansprüche 12 bis 16,
**dadurch gekennzeichnet,**
**dass** der Verbindungsstift (5) zumindest teilweise durch den Stromableiter (3) hindurchgeschossen wird.

18. Verfahren nach wenigstens einem der Ansprüche 12 bis 17,
**dadurch gekennzeichnet,**
**dass** der Verbindungsstift (5) durch eine Öffnung (8) einer Ableiterkammer (6) der Elektrochemischen Zelle (2) hindurch geführt wird.

## Claims

1. A battery assembly (1) comprising at least one, although particularly a plurality of electrochemical cells (2), wherein the at least one electrochemical cell (2) comprises at least one current collector (3) extending through a casing (4) of the electrochemical cell (2), wherein the at least one current collector (3) is electroconductively connected to a connection pin (5), **characterized in that** the connection pin (5) is at least partially enclosed by metal foam (7).

2. The battery assembly according to the preceding claim,
**characterized in that**
the metal foam is disposed in and completely fills a conducting chamber.

3. The battery assembly according to at least one of the preceding claims,
**characterized in that**
the connection pin (5) is in at least indirect, particularly direct, contact with a thermally conductive body (12) made particularly of thermoconductive material.

4. The battery assembly according to at least one of the preceding claims,
**characterized in that**
cooling fins (13) are formed on the thermally conductive body (12).

5. The battery assembly (1) according to the preceding claim,
**characterized in that**
the current collectors (3) of different, particularly adjacent, electrochemical cells (2) are electroconductively connected together by means of a connection pin (5).

6. The battery assembly (1) according to at least one of the preceding claims,
**characterized in that**
the connection pin (5) at least partially penetrates at least one, particularly a plurality of current collectors (3).

7. The battery assembly (1) according to the preceding claim,
**characterized in that**
the connection pin (5) at least partially penetrates the current collector (3) in a cut-out (9), whereby a crater (11) is formed about said cut-out (9).

8. The battery assembly (1) according to at least one of the preceding claims,
**characterized in that**
the current collector (3) is at least partially accommodated in a conducting chamber (6).

9. The battery assembly (1) according to the preceding claim,
**characterized in that**
the conducting chamber (6) is arranged outside of the casing (4) of the electrochemical cell (2).

10. The battery assembly (1) according to at least one of claims 8 or 9,
**characterized in that**
the conducting chamber (6) comprises an opening (8).

11. The battery assembly (1) according to at least one of claims 8 to 10,
**characterized in that**
openings (8) of conducting chambers (6) of adjacent electrochemical cells (2) are aligned with one another.

12. A method for manufacturing a battery assembly in which current collectors (3) of the battery assembly (1) are brought into electroconductive connection with a connection pin (5),
**characterized in that**
the connection pin (5) is at least partially enclosed by metal foam (7).

13. The method according to the preceding claim,
**characterized in that**
the current collectors (3) of different, particularly adjacent, electrochemical cells (2) are electroconductively connected together by means of a connection pin (5).

14. The method according to at least one of claims 12 or 13,
**characterized in that**
the connection pin (5) is at least partially led through the current collector (3), particularly led through a cut-out (9) of the current collector (3).

15. The method according to the preceding claim,
**characterized in that**
the current collector at least partially deforms plastically and/or elastically, particularly in the region of the cut-out (9), upon the passage of the connection pin (5) through said current collector (3).

16. The method according to at least one of claims 12 to 15,
**characterized in that**
a crater forms on the current collector (3), particularly at the cut-out (9), upon the passage of the connection pin (5) through the current collector (3).

17. The method according to at least one of claims 12 to 16,
**characterized in that**
the connection pin (5) is at least partially shot through the current collector (3).

18. The method according to at least one of claims 12 to 17,
**characterized in that**
the connection pin (5) is led through an opening (8) of a conducting chamber (6) of the electrochemical cell (2).

## Revendications

1. Agencement de batterie (1), comprenant au moins une, en particulier plusieurs cellules électrochimiques (2), la au moins une cellule électrochimique (2) comportant au moins un collecteur de courant (3) qui traverse une enveloppe (4) de la cellule électrochimique (2), le au moins un collecteur de courant (3) étant en liaison électroconductrice avec une broche de connexion (5), **caractérisé en ce que** la broche de connexion (5) est au moins partiellement entourée de mousse métallique (7).

2. Agencement de batterie selon la revendication précédente, **caractérisé en ce que**
la mousse métallique est disposée dans un compartiment de collecteur et remplit complètement celui-ci.

3. Agencement de batterie selon au moins une des revendications précédentes, **caractérisé en ce que**
la broche de connexion (5) est en contact au moins indirect, en particulier direct, avec un corps thermoconducteur (12) en matériau notamment thermoconducteur.

4. Agencement de batterie selon au moins une des revendications précédentes, **caractérisé en ce que**
des ailettes de refroidissement (13) sont formées sur le corps thermoconducteur (12).

5. Agencement de batterie (1) selon la revendication précédente, **caractérisé en ce que**
des collecteurs de courant (3) de différentes cellules électrochimiques (2), en particulier contiguës, sont en liaison électroconductrice l'un avec l'autre au moyen d'une broche de connexion (5).

6. Agencement de batterie (1) selon au moins une des revendications précédentes, **caractérisé en ce que**
la broche de connexion (5) traverse au moins partiellement au moins un, en particulier plusieurs collecteurs de courant (3).

7. Agencement de batterie (1) selon la revendication précédente, **caractérisé en ce que**
la broche de connexion (5) traverse au moins partiellement le collecteur de courant (3) dans un passage (9), un cratère (11) étant en particulier formé autour du passage (9).

8. Agencement de batterie (1) selon au moins une des revendications précédentes, **caractérisé en ce que**
le collecteur de courant (3) est logé au moins partiellement dans un compartiment de collecteur (6).

9. Agencement de batterie (1) selon la revendication précédente, **caractérisé en ce que**
le compartiment de collecteur (6) est situé à l'extérieur de l'enveloppe (4) de la cellule électrochimique (2).

10. Agencement de batterie (1) selon au moins une des revendications 8 et 9, **caractérisé en ce que**
un compartiment de collecteur (6) présente une ouverture (8).

11. Agencement de batterie (1) selon au moins une des revendications 8 à 10, **caractérisé en ce que**
des ouvertures (8) de compartiments de collecteur (6) de cellules électrochimiques (2) contiguës sont alignées entre elles.

12. Procédé de fabrication d'un agencement de batterie,
dans lequel des collecteurs de courant (3) dudit dispositif de batterie (1) sont mis en liaison électroconductrice avec une broche de connexion (5), **caractérisé en ce que**
la broche de connexion (5) est au moins partiellement entourée de mousse métallique (7).

13. Procédé selon la revendication précédente, **caractérisé en ce que**
des collecteurs de courant (3) de différentes cellules électrochimiques (2), en particulier contiguës, sont en liaison électroconductrice l'un avec l'autre au moyen d'une broche de connexion (5).

14. Procédé selon au moins une des revendications 12 et 13, **caractérisé en ce que**
la broche de connexion (5) est insérée au moins partiellement au travers du collecteur de courant (3), en particulier par un passage (9) du collecteur de courant (3).

15. Procédé selon la revendication précédente, **caractérisé en ce que**
le collecteur de courant se déforme plastiquement et/ou élastiquement au moins partiellement, en particulier au niveau du passage (9), lors de l'insertion de la broche de connexion (5) au travers du collecteur de courant (3).

16. Procédé selon au moins une des revendications 12 à 15, **caractérisé en ce que**
un cratère se forme sur le collecteur de courant (3), en particulier sur le passage (9), lors de l'insertion de la broche de connexion (5) au travers du collecteur de courant (3).

17. Procédé selon au moins une des revendications 12 à 16, **caractérisé en ce que**
la broche de connexion (5) est au moins partiellement poussée au travers du collecteur de courant (3).

18. Procédé selon au moins une des revendications 12 à 17, **caractérisé en ce que**
la broche de connexion (5) est insérée par une ouverture (8) d'un compartiment de collecteur (6) de la cellule électrochimique (2).
